**Europäisches Patentamt**

(19) **European Patent Office**

**Office européen des brevets**

(11) Veröffentlichungsnummer: **0 064 151**

**A1**

(12) **EUROPÄISCHE PATENTANMELDUNG**

(21) Anmeldenummer: **82102319.9**

(22) Anmeldetag: **20.03.82**

(51) Int. Cl.³: **F 16 D 3/76**
**B 61 F 3/16, F 16 C 7/00**
**B 29 D 3/02**

(30) Priorität: **30.04.81 DE 3117126**

(43) Veröffentlichungstag der Anmeldung:
**10.11.82 Patentblatt 82/45**

(84) Benannte Vertragsstaaten:
**FR GB IT**

(71) Anmelder: **Messerschmitt-Bölkow-Blohm Gesellschaft**
**mit beschränkter Haftung**
**Postfach 801109**
**D-8000 München 80(DE)**

(72) Erfinder: **Bongers, Bernd**
**Nelkenweg 2**
**D-8011 Kirchheim(DE)**

(72) Erfinder: **Meusel, Karl-Heinz**
**Hans-Denk-Strasse 26**
**D-8850 Donauwörth(DE)**

(54) **Wellen-Kupplungs-Verbindung.**

(57) Bei einer Wellen-Kupplungs-Verbindung, beaufschlagt mit oszillierenden Kräften und Momenten, insbesondere für einen schlupfgeregelten Radsatz eines Schienenfahrzeug-Drehgestells, ist eine Faserverbundwerkstoff (FVW)-Membran als Verbindungselement zwischen Welle und Kupplung vorgesehen.

FIG. 1

Wellen-Kupplungs-Verbindung
_____

Die Erfindung betrifft eine Wellen-Kupplungs-Verbindung nach
dem Oberbegriff des Anspruchs 1.

Für Schienenfahrzeuge ist zur Anhebung der kritischen Geschwindigkeit bei Minderung des Verschleißes ein sogenannter schlupfgeregelter Radansatz entwickelt worden (vgl. z. B. DE-PS 28 48
398), dessen Lauf durch eine geregelte Momentübertragung zwischen den Rädern stabilisiert ist.

Ein derartiger schlupfgeregelter Radsatz besitzt folgende Hauptbauteile:

- (feststehende) Achse und Achsbefestigung,
- Räder und Radlager,
- Hohlwellen,
- Schlupf-Kupplung mit rotierenden und statischen Kupplungsteilen.

Dabei ist also die Achse im Gegensatz zum konventionellen Radsatz nicht drehbar gelagert, sondern fest im Drehgestell-Rahmen
eingespannt.

Die Räder sind mit der in Achsmitte liegenden Schlupf-Kupplung
über jeweils eine der Hohlwellen verbunden, wobei zwischen den

**0064151**

Hohlwellen und der Kupplung jeweils eine gesonderte Wellen-Kupplungs-Verbindung vorgesehen sein muß.

Es ist nun Aufgabe der Erfindung, ganz allgemein eine Wellen-Kupplungs-Verbindung zu schaffen, bei der folgende Eigenschaften gleichzeitig erreicht sind:

- elastische Ankopplung in Achs-Richtung,
- hohe Radial-Steifigkeit und hohe Torsions-Steifigkeit,
- spielfreie Übertragung oszillierender Torsions-Kräfte,
- einfacher Aufbau,
- geringes Gewicht,
- kleiner Einbau-Raum,
- Wartungsfreiheit,
- Verschleißfreiheit.

Die Lösung dieser Aufgabe erfolgt erfindungsgemäß durch die Lehre nach dem Kennzeichen des Anspruchs 1.

Die erfindungsgemäße FVW-Membran löst ohne weiteres die gestellte Aufgabe, da Faserverbundwerkstoffe insbesondere eine Kombination unterschiedlicher Steifigkeiten in den einzelnen Richtungen ermöglichen. Im einzelnen:

Torsions-Moment und Querkräfte belasten die FVW-Membran in ihrer Ebene, so daß trotz der im Vergleich zu Stahl niedrigeren Steifigkeit von Faserverbundwerkstoff nur geringe Verformungen auftreten. Axiale Kräfte wirken hingegen senkrecht zur Membran-Ebene, so daß die Membran auf Biegung belastet wird, wobei der geringe Formwiderstand gegenüber Biegung als auch die relativ niedrige Steifigkeit des Verbundwerkstoffs bereits geringe Kräfte ausreichen lassen, um die benötigte axiale Verschiebung (z. B. zum Ausgleich von Lagerspiel) zu bewirken.

Vorteilhafte Ausgestaltungen der Erfindung sind in den Unteransprüchen angegeben.

Die Lehre des Anspruchs 3 hat den besonderen Vorteil, daß die
eigentliche Kraftübertragung (durch die vorzugsweise nach Anspruch 4 vorgesehenen Elemente) über Lochleibung erfolgt, also
formschlüssig, da der für eine Schraubverbindung normalerweise
benötigte Reibschluß von der Vorspannkraft der Schrauben abhängt. Läßt aber diese Vorspannkraft nach, möglichweise wegen
Kriechens des Faserverbundwerkstoffs, so könnte die sichere
Kraftübertragung in Frage gestellt sein.

Die Elemente nach Anspruch 3 bzw. 4 sind jedoch nicht zwingend,
da auch die Lehre nach Anspruch 5 bzw. 6 eine reine Schraubverbindung betriebssicher gestaltet.

Die grundsätzliche Herstellung der FVW-Membran ist in verschiedener Weise möglich, vgl. die Lehre der Ansprüche 7 - 9 und die
alternative, für eine automatisierte Herstellung besonders geeignete Lehre der Ansprüche 10 - 12.

Die Lehre nach dem Anspruch 14 stellt aus folgenden Gründen einen optimalen Kompromiß dar:

Da die Querkräfte bezüglich der Membran umlaufend wirken, zusätzlich aber das Torsions-Moment berücksichtigt werden muß, ergibt
sich für alle Stellen in der FVW-Membran ein Spannungszustand
mit in der Membran-Ebene wirkenden Zug-, Druck- und Schub-Spannungen.

Die Lehre nach dem Anspruch 15 betrifft den Unterfall einer ebenen, insbesondere kreisringförmig ausgebildeten FVW-Membran.

Dabei kann eine weitere Optimierung erreicht werden durch die Lehre nach Anspruch 16 oder 17, was jedoch einen etwas höheren Aufwand an Lagerhaltung und Legearbeit mit sich bringt.

Ein anderer,          Unterfall der FVW-Membran ist durch die Lehre nach dem Anspruch 18 gegeben.

Vorzugsweise ist dabei gemäß Anspruch 19 die Membran mit der Hohlwelle verklebt, da sie an der Hohlwelle nicht lösbar befestigt zu sein braucht, so daß eine Einsparung an Raum und Aufwand gegenüber Schrauben mit Bohrungen und ggf. Paßbolzen od. dgl. erzielt wird.

Die Lehre des Anspruchs 20 hat den besonderen Vorteil, daß dadurch die Legetechnik für die durch den konischen Rohransatz nicht mehr eben abwickelbare Membran handwerklich beherrschbarer ist.

Durch die Lehre nach dem Anspruch 21 ergibt sich eine gleichmäßige Verteilung der Überlappungen der einzelnen Zuschnitte.

Nach der Lehre des Anspruchs 22 wird die Lochleibungs-Spannung gering gehalten.

Die Lehre des Anspruchs 23 vermeidet Überlappungsstöße (bringt allerdings einen größeren Verschnitt durch den kreisförmigen Ausschnitt in der Mitte mit sich) und ist bei genügender Drapierfähigkeit des Prepregs für die Zuschnitte ausführbar, obwohl auch diese Membran-Geometrie nicht mehr eben abwickelbar ist.

Folgende Faserverbundwerkstoffe kommen insbesondere in Frage:

- Verstärkungsfasern:

  - Glasfasern,
  - Kohlenstoff-Fasern,
  - Aramidfasern ("Kevlar" (WZ));

- Bettungsmasse (Matrix):

  - Polyesterharz,        *
  - Epoxidharz,           *    Duroplaste (bevorzugt bei Struk-
  - Phenolharz;           *              turbauteilen)
                          *

  - Polyamid,             *
  - Polypropylen,         *    Thermoplaste
  - Polycarbonat          *

Anhand der Zeichnung wird die Erfindung beispielsweise näher erläutert. Es zeigen:

Fig. 1 ein Ausführungsbeispiel einer erfindungsgemäßen FVW-Membran mit einstückigem, leicht konischem Rohransatz, eingebaut in einem schlupfgeregelten Radsatz (im Schnitt);

Fig. 2 in Draufsicht ein Ausführungsbeispiel einer
kreisringförmigen FVW-Membran mit radialer
Faserorientierung bei Teil-Zuschnitten aus
Halbzeugen mit vorwiegend unidirektionaler
Faserorientierung (z. B. unidirektionalen Prepregs, kettverstärkten Geweben) od. dgl.;

Fig. 3 ein Ausführungsbeispiel einer FVW-Membran mit
einstückigem, leicht konischem Rohransatz, wobei eine Laminat-Lage aus mehreren Teil-Zuschnitten besteht, deren Zuschneide-Kontur zusätzlich
gezeigt ist; (Fig. 3a);

Fig. 4 in Draufsicht ein weiteres Ausführungsbeispiel
der erfindungsgemäßen FVW-Membran mit einstückigem, leicht konischem Rohransatz;

Fig. 5 eine schematische, abgewickelte Schnittansicht
A - A von Fig. 4; und

Fig. 6 ein weiteres Ausführungsbeispiel der erfindungsgemäßen FVW-Membran mit einstückigem, leicht
konischem Rohransatz, das unter Verwendung von
kreisringförmigen und streifenförmigen Zuschnitten hergestellt wird; hierzu siehe auch
Fig. 6a.

F i g . 1 zeigt die eine Hälfte eines schlupfgeregelten Radsatzes, nämlich ein Scheibenrad 1, das über ein Lager 2 auf
einer feststehenden Achse 3 gelagert ist. Mit dem Scheibenrad
1 ist eine Hohlwelle 4 verbunden, die ihrerseits über eine FVW-
Membran 20 mit einer Kupplung 10 in noch zu erläuternder Weise
verbunden ist. Die schematisch angedeutete Kupplung 10 besitzt
zwei rotierende Kupplungsteile 12 und 14, wobei das rotierende
Kupplungsteil 14 mit dem anderen (nicht gezeigten) Scheibenrad
verbunden ist. Ferner weist die Kupplung 10 Lager 13a und 13b
sowie einen Ständer 16 auf, der elektromagnetisch den Eingriff
der beiden rotierenden Kupplungsteile 14 und 16 bewirkt.

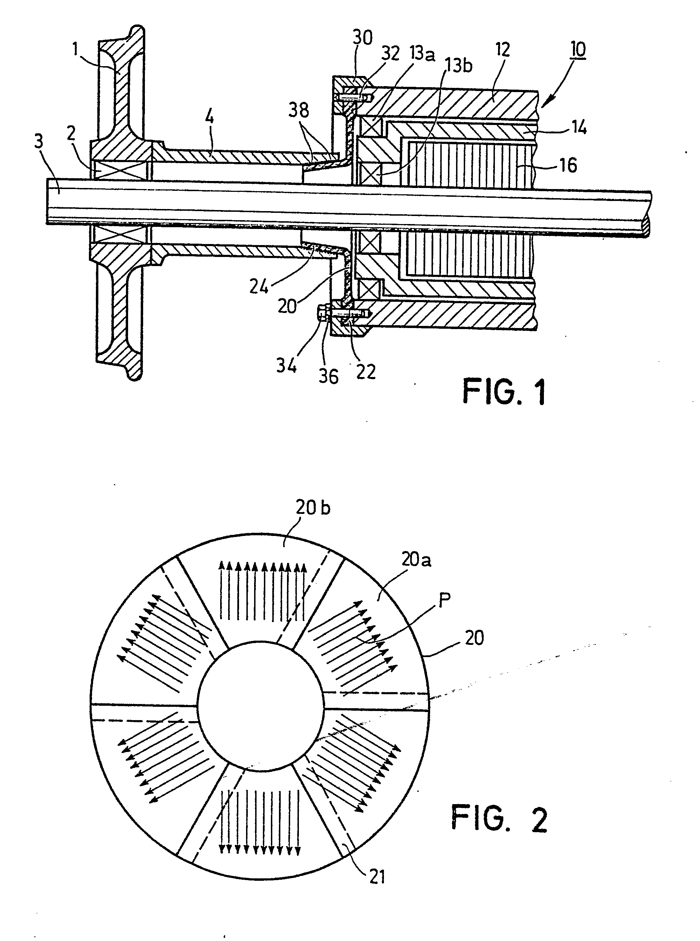

Die FVW-Membran 20 besitzt einen einstückigen, leicht konischen
Rohransatz 24, der in die Hohlwelle 4 eingeschoben und mit dieser durch eine schematisch angedeutete Verklebung 38 verbunden
ist, sowie an ihrem Außenrand eine Verstärkung 22. Die Verstärkung 22 ist mit dem rotierenden Kupplungsteil 12 durch Paßbolzen 32 sowie Schrauben 34 mit Federring 36 und mittels eines zusätzlichen Außenrings 30 verbunden, wie ohne weiteres aus Fig. 1
ersichtlich ist. Tatsächlich sind mehrere derartige Verbindungselemente - je nach Bedarf - vorgesehen.

F i g . 2 zeigt - im Gegensatz zu allen übrigen Figuren -
eine eben, nämlich kreisringförmig ausgebildete FVW-Membran 20
(d.h. ohne einen einstückigen, leicht konischen Rohransatz 24
wie in Fig. 1) aus mehreren Teil-Zuschnitten wie 20a und 20b
mit radialer Faserorientierung P, wobei die Teil-Zuschnitte Halbzeuge aus unidirektionalem Prepreg, kettverstärktem Gewebe od.
dgl. sind. Die Teil-Zuschnitte sind an Überlappungen 21
zusammengefügt, und zwar von derselben Art, wie im Schnitt in
F i g . 5 als Überlappungen 300 dargestellt.

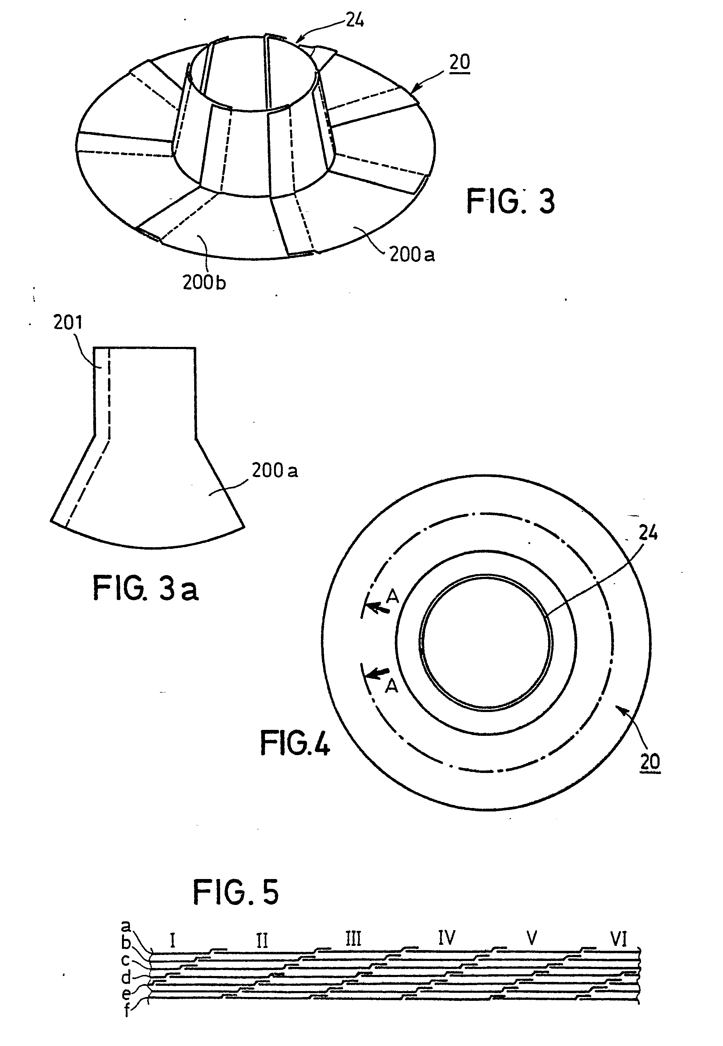

F i g . 3 zeigt im Gegensatz zu Fig. 2, wo die FVW-Membran eben,
nämlich kreisringförmig   ausgebildet ist, eine FVW-Membran 20
mit einem einstückigen, leicht konischem Rohransatz 24 - ähnlich wie in Fig. 1 - , wobei die Membran aus sich überlappenden Teil-Zuschnitten wie 200a und 200b zusammengesetzt ist. Die Überlappungen 201 haben den gleichen Aufbau wie in F i g . 5 gezeigt. In Fig. 3 ist nur eine einzige Laminat-Lage der FVW-Membran 20 gezeigt, tatsächlich besteht die Membran aus mehreren derartigen Lagen, die jeweils aus mehreren Teil-Zuschnitten wie 200a und 200b zusammengefügt sind.

F i g . 4 zeigt ähnlich wie Fig. 3 eine FVW-Membran 20 mit einstückigem, leicht konischem Rohransatz 24.

F i g . 5 zeigt dazu genauer die einzelnen Laminat-Lagen a - f, die ihrerseits jeweils aus Teil-Zuschnitten I - VI zusammengesetzt sind. Die einzelnen Lagen a - f sind gegeneinander verdreht, um eine gleichmäßige Verteilung der Überlappungs-Stöße 300 der Teil-Zuschnitte I - VI zu erzielen.

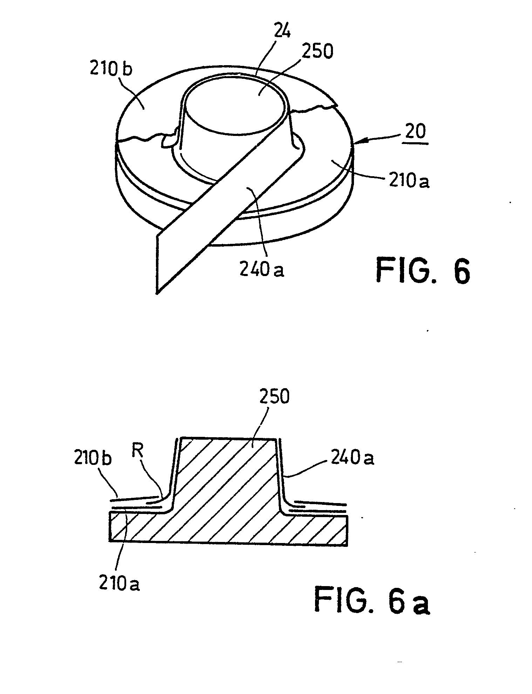

F i g . 6 zeigt ein letztes Ausführungsbeispiel einer FVW-Membran 20 mit einstückigem, leicht konischem Rohransatz 24. Zu ihrer Herstellung werden um eine Form (Positivteil) 250 nacheinander kreisringförmige Zuschnitte wie 210a und 210b aus insbesondere Prepreg oder Gewebe, die verschiedene Kreisringlagen bilden, sowie streifenförmige Zuschnitte wie 240a aufgebracht, wie unmittelbar aus Fig. 6, insbesondere deren (unterer) Schnittansicht ersichtlich ist. Dabei sind insbesondere die streifenförmigen Zuschnitte wie 240a, die ebenfalls aus Prepreg oder Gewebe bestehen können, am unteren Rand leicht ausgebeult, damit sie sich am Übergangsradius R zwischen dem von den kreisringförmigen Schnitten wie 210a und 210b gebildeten Kreisring und dem Anschluß zum von den streifenförmigen Abschnitten 240a gebildeten konischen Rohransatz 24 überlappen, wie ebenfalls deutlich aus der Schnittansicht von Fig. 6 erkennbar ist.

MESSERSCHMITT-BÖLKOW-BLOHM
GESELLSCHAFT
MIT BESCHRÄNKTER HAFTUNG,
MÜNCHEN

Ottobrunn, 30.04.81

BT01 Hei/Bi/ma

8987

– 1 –

A n s p r ü c h e

1. Wellen-Kupplungs-Verbindung,
   - beaufschlagt mit oszillierenden Kräften und Momenten,
      - insbesondere für einen schlupfgeregelten Radsatz eines
        Schienenfahrzeug-Drehgestells,
   g e k e n n z e i c h n e t   d u r c h
   - eine Faserverbundwerkstoff(FVW)-Membran (20)
      - als Verbindungselement zwischen Welle (4) und Kupplung (10)
   (Fig. 1).

2. Verbindung nach Anspruch 1,
   dadurch gekennzeichnet,
   - daß die FVW-Membran (20)
      - ihrerseits verbunden ist mit der Welle (4) und der Kupplung (10) durch
         - Befestigungsschrauben (34) und/oder Verklebung (38)
   (Fig. 1).

3. Verbindung nach Anspruch 2,
   dadurch gekennzeichnet,
   - daß zusätzlich zu den Befestigungs-Schrauben (34)
      - das Drehmoment mittels Lochleibung übertragende Elemente
        vorgesehen sind
   (Fig. 1).

4. Verbindung nach Anspruch 3,
dadurch gekennzeichnet,
- daß die Elemente
  - Paßbolzen (32), Spannhülsen oder Kerbstifte sind
(Fig. 1).


5. Verbindung nach Anspruch 2,
dadurch gekennzeichnet,
- daß zusätzlich zu den Befestigungs-Schrauben (34)
  - diese belastende elastische Elemente vorgesehen sind
(Fig. 1).


6. Verbindung nach Anspruch 5,
dadurch gekennzeichnet,
- daß die elastischen Elemente
  - Federringe (36) oder Teller-Federn sind
(Fig. 1).


7. Verbindung nach einem der vorhergehenden Ansprüche,
dadurch gekennzeichnet,
- daß die FVW-Membran (20)
  - hergestellt ist durch Prepreg-Legetechnik und anschließendes Verpressen in einem Werkzeug mit Patrize und Matrize.


8. Verbindung nach einem der Ansprüche 1 - 7,
dadurch gekennzeichnet,
- daß die FVW-Membran (20)
  - hergestellt ist durch Handlaminiertechnik.

9. Verbindung nach Anspruch 8,
dadurch gekennzeichnet,
 - daß      Prepregs
   - mit gerichteten Kurzfasern (P) verwendet worden sind
(Fig. 2).


10. Verbindung nach einem der Ansprüche 1 - 6,
dadurch gekennzeichnet,
 - daß die FVW-Membran (20)
   - hergestellt ist, indem aus großflächigen Laminaten vor
     oder nach dem Aushärten Zuschnitte (20a, 20b; 200a, 200b)
     gefertigt worden sind
(Fig. 2; 3).


11. Verbindung nach Anspruch 10,
dadurch gekennzeichnet,
 - daß die großflächigen Laminate
   - hergestellt sind in Filament-Winding-Technik oder durch
     automatisches Tränken von Gewebe.


12. Verbindung nach Anspruch 10 oder 11,
dadurch gekennzeichnet,
 - daß die Zuschnitte (20a, 20b; 200a, 200b)
   - aus den großflächigen Laminaten ausgestanzt oder ausgeschnitten worden sind
(Fig. 2; 3).


13. Verbindung nach einem der vorhergehenden Ansprüche,
dadurch gekennzeichnet,
 - daß die FVW-Membran (20)
   - aus in ihrer Ebene quasi-isotropem Werkstoff besteht.

14. Verbindung nach Anspruch 13,
   dadurch gekennzeichnet,
   - daß der quasi-isotrope Werkstoff
     - ein bidirektionales Gewebe als Verstärkungsmaterial
       besitzt.

15. Verbindung nach einem der vorhergehenden Ansprüche,
   dadurch gekennzeichnet,
   - daß die kreisringförmig ausgebildete FVW-Membran (20)
     - hergestellt ist, indem die Zuschnitte kreisringförmig
       oder im wesentlichen kreissektorförmig (20a, 20b) ge-
       fertigt sind
   (Fig. 2).

16. Verbindung nach Anspruch 15,
   dadurch gekennzeichnet,
   - daß die Zuschnitte für die Faserverstärkung
     - kettverstärkte Gewebe sind.

17. Verbindung nach Anspruch 15,
   dadurch gekennzeichnet,
   - daß die Zuschnitte (20a, 20b)
     - unidirektionale Prepregs mit radialer Faserorientierung (P)
       sind
   (Fig. 2).

18. Verbindung nach einem der vorhergehenden Ansprüche,
    – wobei die Welle eine Hohlwelle ist,
    d a d u r c h   g e k e n n z e i c h n e t ,
    – daß die FVW-Membran (20)
       – einen einstückigen, leicht konischen Rohransatz (24)
         besitzt,
          – der in bzw. auf die entsprechend an ihrem Ende geformte
            Hohlwelle (4) schiebbar ist
    (Fig. 1, 3, 4, 6).


19. Verbindung nach Anspruch 18,
    gekennzeichnet durch
    – eine Verklebung (38)
       – zwischen dem konischen Rohransatz (24) und der Hohlwelle (4)
    (Fig. 1).


20. Verbindung nach Anspruch 18 oder 19,
    dadurch gekennzeichnet,
    – daß jede Laminat-Lage (a, b, c)
       – in mehrere (z. B. sechs) Teil-Zuschnitte (200a, 200b;
         I – VI) unterteilt ist
    (Fig. 3; 4, 5).


21. Verbindung nach Anspruch 20,
    dadurch gekennzeichnet,
    – daß jede Laminat-Lage (a, b, c)
       – um einen Bruchteil des Winkels, den ein einzelner Teil-
         Zuschnitt (I – VI) bedeckt, verdreht ist
    (Fig. 4, 5).

8987


22. Verbindung nach Anspruch 21,

    dadurch gekennzeichnet,

    - daß die FVW-Membran (20)

        - am Außen- und/oder Innenrand eine Verstärkung (22) besitzt

    (Fig. 1).


23. Verbindung nach Anspruch 18 oder 19,

    dadurch gekennzeichnet,

    - daß kreisringförmige und streifenförmige Prepreg- und/oder
      Gewebe-Zuschnitte (210a, b; 240a) verwendet sind,

        - die so bemessen sind, daß sie sich am Übergangsradius (R)
          zwischen Kreisring und Anschluß zum von den streifenförmigen Zuschnitten (240a) gebildeten konischen Rohransatz (24)
          überlappen

    (Fig. 6).

FIG. 1

FIG. 2

24

20

FIG. 3

200a

200b

201

200a

FIG. 3a

24

A

A

FIG.4

20

FIG. 5

a
b
c
d
e
f

I    II    III    IV    V    VI

210b  24  250

20

210a

240a

**FIG. 6**

250

210b  R  240a

210a

**FIG. 6a**

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | POLYTECHNISCH TIJDSCHRIFT WERKTUIGBOUW, Band 31, Nr.6, Juni 1976, Den Haag (NL) "De bendix flexibele membraankoppeling", Seiten 374,375 * Seite 374, Spalte 4, Absätze 1-3; Figuren 7,8,9 * | 1 | F 16 D   3/76<br>B 61 F   3/16<br>F 16 C   7/00<br>B 29 D   3/02 |
| Y | DE-A-2 927 955  (MBB) * Seite 3, Absatz 2; Seite 5, Absatz 2, 4. Zeile von unteren; Seite 6, Absatz 2; Figur 5 * | 1 | |
| A | US-A-3 369 843  (PREW)  * Spalte 1, Zeilen 27-70; Anspruch 7; Figuren 2,4,5; Spalte 2, Zeile 64 - Spalte 3, Zeile 20; Spalte 4, Zeilen 30-44 * | 1,7,8, 10-17, 20-23 | |
| A,D | DE-B-2 848 398  (MBB) | | **RECHERCHIERTE SACHGEBIETE (Int. Cl. 3)**<br><br>F 16 D<br>F 16 C<br>B 61 F |

Der vorliegende Recherchenbericht wurde für alle Patentansprüche erstellt.

| Recherchenort DEN HAAG | Abschlußdatum der Recherche 09-07-1982 | Prüfer GROTZINGER J.P. |
|---|---|---|